# EUROPEAN PATENT APPLICATION

(11) **EP 4 832 435 A1**
(43) Date of publication of application: **28.10.2026**
(21) Application number: 24909451.7
(22) Date of filing: 02.04.2024
(51) Int. Cl.: H04L 41/0663, H04L 43/0823, H04L 41/0631, H04L 41/0654

(54) **TRANSMISSION LINK FAULT PROCESSING METHOD, ELECTRONIC DEVICE, AND STORAGE MEDIUM**

(30) Priority: 28.12.2023 CN 202311836307
(71) Applicant: ZTE CORPORATION, Shenzhen, Guangdong 518057 (CN)
(72) Inventor: LIANG, Shuang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/085597
(87) International publication number: WO 2025/138482

(57) **Abstract**

Embodiments of the present application relate to the technical field of communications, and provide a transmission link fault processing method, an electronic device, and a storage medium. The method comprises: obtaining fault information of a transmission link; on the basis of the fault information, determining a first target virtual level corresponding to a faulty protection ring; determining, from among protection rings of which the virtual levels are the first target virtual layer level, a target protection ring for carrying service on the faulty protection ring; and switching the service on the faulty protection ring to the target protection ring.

## Description

### CROSS-REFERENCE TO RELATED APPLICATIONS

This application claims priority to the Chinese patent application No. 202311836307.0 filed with the CNIPA on December 28, 2023, and entitled "TRANSMISSION LINK FAULT PROCESSING METHOD, ELECTRONIC DEVICE, AND STORAGE MEDIUM", and the entire content of this application is incorporated in the present disclosure by reference.

### TECHNICAL FIELD

The present application belongs to the technical field of semiconductors, and specifically relates to a method for handling a transmission link fault, an electronic device, and a storage medium.

### BACKGROUND

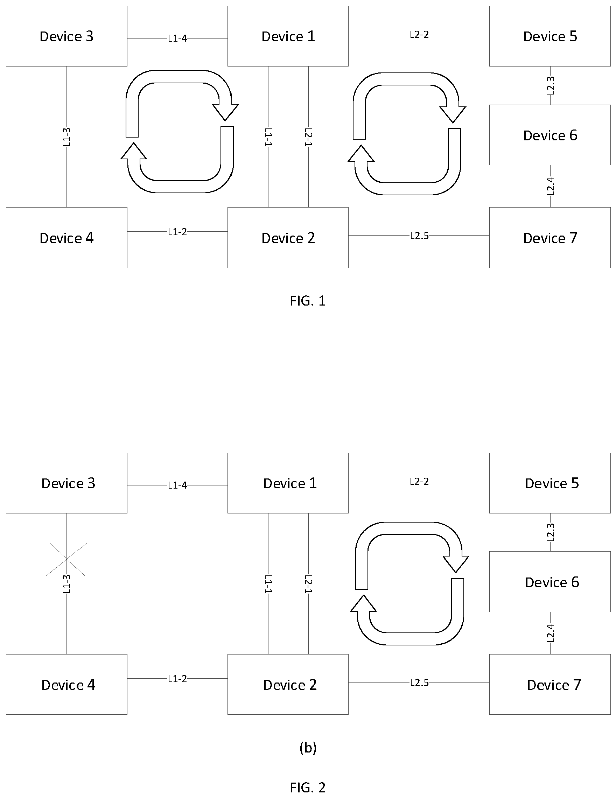

A transmission protection ring is a common transmission protection manner. Taking an optical fiber protection ring as an example, FIG. 1 shows a schematic diagram of a device transmission protection ring in the related art. As shown in FIG. 1, optical fibers L1-1, L1-2, L1-3, and L1-4 are connected to devices 1, 2, 3, and 4 to form an optical fiber protection ring L1 for devices 1 and 2; and optical fibers L2-1, L2-2, L2-3, L2-4, and L2-5 are connected to devices 1, 2, 5, 6, and 7 to form another optical fiber protection ring L2 for devices 1 and 2. When any optical fiber on any optical fiber protection ring fails, the reliability of device networking can be improved by switching the optical fiber protection ring. FIG. 2 shows a schematic diagram of a method for handling a transmission link fault in the related art. As shown in FIG. 2, when an optical fiber L1-3 on an optical fiber protection ring L1 fails, a service carried by devices 1 and 2 on the optical fiber protection ring L1 can be switched to a normal optical fiber protection ring L2, thereby improving reliability.

In the related art, service switching of the optical fiber protection ring also has the technical problem of having a relatively large impact on services while improving the reliability. How to further improve service reliability while reducing the impact on the services has become an urgent problem to be solved.

### SUMMARY

The objective of embodiments of the present application is to provide a method for handling a transmission link fault, an electronic device, and a storage medium.

To solve the above technical problems, the embodiments of the present application are implemented through various aspects below.

According to a first aspect of the embodiments of the present disclosure, a method for handling a transmission link fault is provided. The method includes: acquiring fault information of a transmission link, wherein the fault information includes information of a faulty protection ring of the transmission link, the transmission link includes at least two virtual levels, each virtual level includes at least one protection ring, and each protection ring at a higher virtual level includes at least one protection ring at a lower virtual level; determining, according to the fault information, a first target virtual level corresponding to the faulty protection ring; determining, from among protection rings at the first target virtual level, a target protection ring for carrying a service on the faulty protection ring; and switching the service on the faulty protection ring to the target protection ring.

According to a second aspect of the embodiments of the present disclosure, a method for handling a loop fault is provided. The method includes: performing, in response to fault information of a transmission link in a first loop, fault handling on the transmission link by using the method described in the first aspect, wherein the fault information includes information of a faulty protection ring; and switching, in a case where a first candidate protection ring that satisfies a preset condition is not determined from among protection rings at a first target virtual level corresponding to the faulty protection ring, a service carried on the faulty protection ring in the first loop into a second loop, wherein the second loop is a protection loop of the first loop, and the preset condition includes at least one of a preset state condition and/or a preset capacity condition.

According to a third aspect of the embodiments of the present disclosure, an electronic device is provided, including: a memory, a processor, and computer-executable instructions stored on the memory and runnable on the processor. The computer-executable instructions, when executed by the processor, implement the steps of the method described in the embodiment of the first aspect or the embodiment of the second aspect above.

According to a fourth aspect of the embodiments of the present disclosure, a computer-readable storage medium is provided. The computer-readable storage medium stores computer-executable instructions, and the computer-executable instructions, when executed by a processor, implement the steps of the method described in the embodiment of the first aspect or the embodiment of the second aspect above.

### BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.
FIG. 1 shows a schematic diagram of a device transmission protection ring in the related art.
FIG. 2 shows a schematic diagram of a method for handling a transmission link fault in the related art.
FIG. 3 shows a schematic flowchart of a method for handling a transmission link fault provided by embodiments of the present application.
FIG. 4 shows a schematic diagram of a logical structure of a transmission link protection ring provided by embodiments of the present application.
FIG. 5 shows another schematic flowchart of a method for handling a transmission link fault provided by embodiments of the present application.
FIG. 6 shows yet another schematic flowchart of a method for handling a transmission link fault provided by embodiments of the present application.
FIG. 7 shows yet another schematic flowchart of a method for handling a transmission link fault provided by embodiments of the present application.
FIG. 8 shows yet another schematic flowchart of a method for handling a transmission link fault provided by embodiments of the present application.
FIG. 9 shows a schematic flowchart of a method for handling a loop fault provided by embodiments of the present application.
FIG. 10 shows another schematic flowchart of a method for handling a loop fault provided by embodiments of the present application.
FIG. 11 is a schematic diagram of a hardware structure of an electronic device for executing a method for handling a transmission link fault provided by embodiments of the present application.

### DETAILED DESCRIPTION

In order to make those skilled in the art understand the technical solutions in the present application better, the technical solutions in the embodiments of the present application will be described below clearly and completely with reference to the drawings in the embodiments of the present application. Apparently, the described embodiments are only part of the embodiments of the present application, but not all the embodiments. On the basis of the embodiments in the present application, all other embodiments obtained by those ordinarily skilled in the art without inventive efforts should fall within the protection scope of the present application.

After analysis, the inventor of the present application found that in transmission, multiple logical transmissions at different virtual levels may often be multiplexed, and these logical transmissions may form logical transmission protection rings at different virtual levels. Taking an optical fiber as an example, one physical optical fiber may carry a transmission MPLS section (TMS), each TMS may include at least one transport protocol (TP), and each TP may further include at least one pseudo wire (PW). In a transmission protection manner in some cases, when any logical transmission protection ring (for example, a logical transmission protection ring at a TP application level) fails, service switching of the entire physical transmission protection ring (for example, an optical fiber protection ring) is also triggered, causing services carried by other logical transmission protection rings without faults to be switched together. This results in great waste of transmission resources and also has a certain impact on services. The present application provides a method for handling a transmission link fault, which can switch services to a target protection ring at the same virtual level, ensuring normal transmission of services carried on a faulty protection ring, while avoiding service switching of the entire physical transmission link when part logical transmission links fail, and preventing service switching from affecting services carried on other logical protection rings. This reduces waste of transmission resources, and improves utilization of the transmission resources.

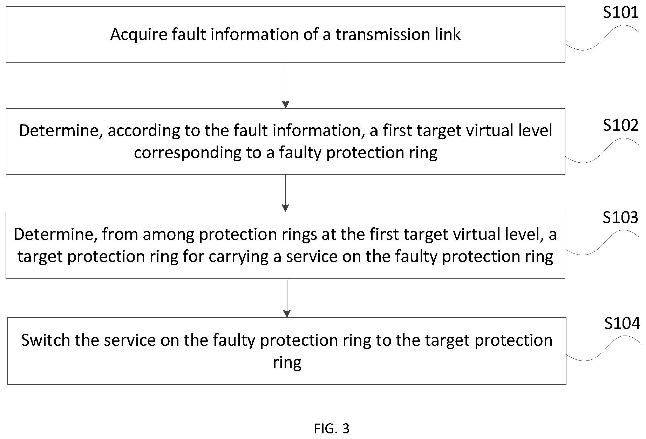

FIG. 3 shows a schematic flowchart of a method for handling a transmission link fault provided by embodiments of the present application. The method may be executed by a network element device, or may be executed by a network management device connected to the network element device. As shown in FIG. 3, the method may include the following steps.

In step 101, fault information of a transmission link is acquired.

The fault information includes information of a faulty protection ring of the transmission link, the transmission link includes at least two virtual levels, each virtual level includes at least one protection ring, and each protection ring at a higher virtual level includes at least one protection ring at a lower virtual level.

In some embodiments, the transmission link may be an optical fiber loop, the virtual level may include a TMS management level and a TP application level, the TMS management level may be a higher virtual level of the TP application level, the TMS management level may include one first protection ring, and the first protection ring may include at least two second protection rings at the TP application level.

In another embodiment, the virtual level may further include a PW application level, the TP application level is a higher virtual level of the PW application level, and each of the second protection rings includes at least two third protection rings at the PW application level.

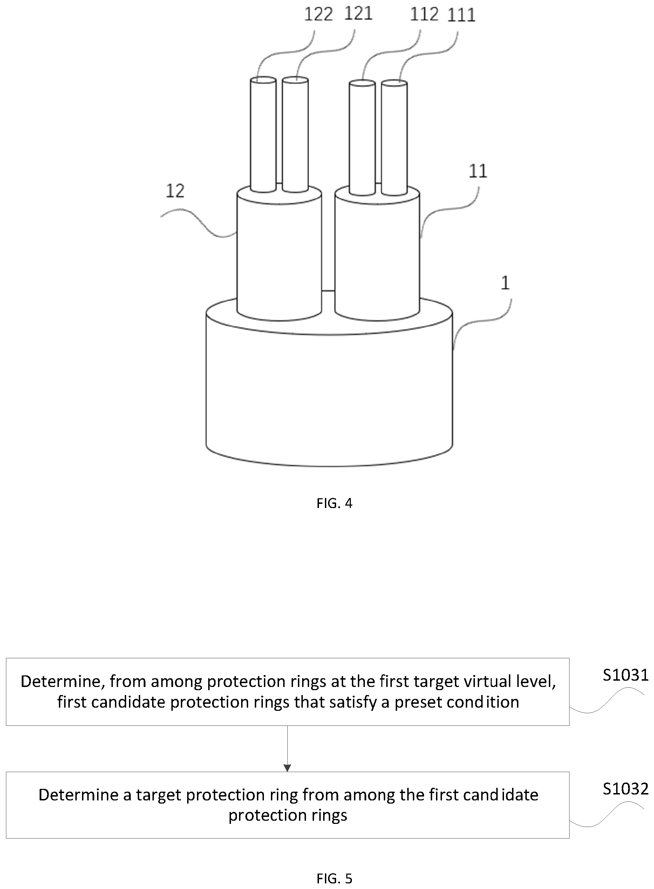

FIG. 4 shows a schematic diagram of a logical structure of a transmission link protection ring provided by embodiments of the present application. As shown in FIG. 4, taking an optical fiber loop as an example, a TMS management-level protection ring 1 may include a first TP application-level protection ring 11 and a second TP application-level protection ring 12. The first TP application-level protection ring 11 may include a first PW application-level protection ring 111 and a second PW application-level protection ring 112. The second TP application-level protection ring 12 may include a third PW application-level protection ring 121 and a fourth PW application-level protection ring 122.

Those skilled in the art may flexibly set the quantity of virtual levels according to types of transmission links and service requirements, and may also flexibly set the quantity of logical protection rings contained in each virtual level. Still taking an optical fiber loop as an example, the quantity of TMS management-level protection rings, TP application-level protection rings, and PW application-level protection rings may be flexibly set according to the service requirements. For example, each TMS management-level protection ring may include only one TP application-level protection ring, and each TP application-level protection ring may include three PW application-level protection rings. Each TMS management-level protection ring may also include three TP application-level protection rings, and each TP application-level protection ring may include two PW application-level protection rings, which is not limited in the present application. It should be noted that although TMS, TP, and PW in optical fiber transmission are used as examples of protection rings at different virtual levels, this should not be construed as a limitation on the protection rings in the technical solutions of the present application. The present application may be applied to other different types of virtual-level protection rings, and may also be applied to transmission link protection rings in other transmission scenarios.

In step S102, a first target virtual level corresponding to the faulty protection ring is determined according to the fault information.

Exemplarily, the transmission link fault may be a fault corresponding to protection rings at different virtual levels, and the causes of the fault may be various, such as interruption of any physical optical fiber, connection interruption of a logical protection ring at any virtual level, or a bit error rate of a logical protection ring connection at any virtual level exceeding a preset threshold. The fault information may include the corresponding virtual level. Taking an optical fiber protection ring as an example, when a logical connection at a certain virtual level in the protection ring fails and then causes the protection ring at that virtual level to fail, the first target virtual level corresponding to the faulty protection ring may be included in the fault information. For example, in optical fiber transmission, if the logical connection at that level between any two network elements in the first TP application-level protection ring 11 fails, it will cause the first TP application-level protection ring 11 to fail. The first target virtual level of the first TP application-level protection ring 11 may be, for example, Level2, wherein Level2 is used to represent that the virtual level of the first TP application-level protection ring 11 is the TP application level.

In step S103, a target protection ring for carrying a service on the faulty protection ring is determined from among protection rings at the first target virtual level.

The target protection ring is a protection ring that carries the service on the faulty protection ring during the transmission link fault and whose virtual level corresponds to the first target virtual level, i.e., a protection ring at the same level.

For example, in the case where the logical connection at that level between any two network elements in the first TP application-level protection ring 11 fails and then the first TP application-level protection ring 11 is caused to fail, the target protection ring may be determined from protection rings at the same level (i.e., virtual levels of the protection rings are also the first target virtual level Level2) according to the first target virtual level Level2 of the first TP application-level protection ring 11.

When the transmission link fault occurs, multiple pieces of fault information at different virtual levels may be generated concurrently. For example, in a case of a fault in the first TP application-level protection ring 11, in addition to the generated fault information of the first TP application-level protection ring 11, a lower-level protection ring of the first TP application-level protection ring 11 (such as the first PW application-level protection ring 111 and the second application-level optical fiber protection ring 112) may also generate fault information with a corresponding virtual level of Level3 (i.e., the PW application level) due to the fault in the first TP application-level protection ring 11. In this case, the target protection ring may be determined according to the first target virtual level in the fault information with the highest virtual level among the multiple pieces of fault information at different virtual levels.

In step S104, the service on the faulty protection ring is switched to the target protection ring.

Exemplarily, after the target protection ring corresponding to the faulty protection ring is determined, the service on the faulty protection ring may be switched to the target protection ring, so that the service on the faulty protection ring is carried by the target protection ring, thereby improving the reliability of the transmission link.

Still taking the optical fiber transmission as an example, in the case where the first TP application-level protection ring 11 fails, it may be determined that the target protection ring is the second TP application-level protection ring 12, and the service of the first TP application-level protection ring 11 is switched to the second TP application-level protection ring 12. There is no need to switch the service of the entire optical fiber loop to the protection loop, which solves the technical problem in the related art that service switching of the entire physical optical fiber loop causes a normal logical transmission link (for example, the second TP application-level protection ring 12) to also be switched to the protection loop, and the service on the normal logical transmission link (for example, the second TP application-level protection ring 12) is thereby affected.

By adopting the above technical approach, the service can be switched to the target protection ring at the same virtual level, ensuring normal transmission of the service carried on the faulty protection ring, while avoiding service switching of the entire physical transmission link when some logical transmission links fail, and preventing service switching from affecting services carried on other logical protection rings. This reduces waste of transmission resources, and improves utilization of the transmission resources.

FIG. 5 shows another schematic flowchart of the method for handling the transmission link fault provided by embodiments of the present application. As shown in FIG. 5, step S103 may include the following steps. In step S1031, first candidate protection rings that satisfy a preset condition are determined from among the protection rings at the first target virtual level.

The preset condition may include a preset state condition and/or a preset capacity condition.

In some embodiments, the preset capacity condition may include that a remaining service bandwidth of a protection ring is greater than or equal to a service bandwidth of the faulty protection ring. The preset state condition may include at least one of the following: a switching allowed function of a protection ring is enabled; a service state of a protection ring is an activated state; or a service state of a protection ring on a network management device is consistent with a service state of a protection ring on a network element device.

Those skilled in the art may also flexibly set at least one of the preset state condition and the preset capacity condition according to service requirements, which is not limited in the present application.

In some embodiments, the protection ring at each virtual level may further include one or more pieces of additional information as shown in Table 1 below. In some possible implementations, the fault information may include the one or more pieces of additional information mentioned above, and the one or more pieces of additional information mentioned above may also be obtained by a network element device or a network management device connected to the network element device by querying configuration information and real-time state information.

**Table 1**

| Additional information | Meaning |
|---|---|
| Return manner | A manner by which the service returns after fault recovery of the protection ring, for example, manual return in response to a user operation or automatic return. |
| Return parameter | A parameter used to control service return after fault recovery of the protection ring, for example: when the return manner is automatic return, a preset wait-to-restore duration threshold for automatic return. |
| Service state | Used to represent the service state of the protection ring, for example, the service state may include an activated state, an operation and maintenance state, or a fault state. |
| Service parameter | A parameter related to the service carried by the protection ring, for example, the configured service bandwidth and remaining service bandwidth of the protection ring. For example: if a configured service bandwidth of the first TP application-level protection ring 11 is 100 G, a configured service bandwidth of the first PW application-level protection ring 111 is 40 G, and a configured service bandwidth of the second PW application-level protection ring 112 is 40 G, then a remaining service bandwidth of the first TP application-level protection ring 11 is 20 G. |
| Consistency state | Whether a state of the protection ring on the device is consistent with a state on the network management device of the device. |
| Switching allowed function | Whether the protection ring allows automatic switching. |
| Creation information | For example, information about a creation time and a creation user of the protection ring. |

In some embodiments, whether each protection ring of which the virtual level is the first target virtual level satisfies the preset condition may be determined through the above additional information.

Exemplarily, in a case where the faulty protection ring is the first PW application-level protection ring 111, the first candidate protection rings may be the second PW application-level protection ring 112, the third PW application-level protection ring 121, and the fourth PW application-level protection ring 122 that satisfy the preset condition.

By determining the target protection ring from the first candidate protection rings screened by at least one of the preset state condition or the preset capacity condition, abnormal situations such as excessive service load on the target protection ring after switching the service on the faulty protection ring to the target protection ring can be avoided, and the reliability of handling the transmission link fault is improved.

In step S1032, the target protection ring is determined from among the first candidate protection rings.

In some embodiments, in a case where one first candidate protection ring is provided, the first candidate protection ring may be determined as the target protection ring.

In another embodiment, in a case where a plurality of first candidate protection rings are provided, the target protection ring is determined from among the first candidate protection rings according to a preset priority order.

In some possible implementations, the target protection ring may be determined from among the plurality of first candidate protection rings according to the preset priority order by any of the following manners.

Manner 1, in a case where second candidate protection rings exist among the first candidate protection rings, a protection ring with a highest target priority order among the second candidate protection rings is determined as the target protection ring.

The higher protection ring to which a second candidate protection ring belongs is the the same as a higher protection ring to which the faulty protection ring belongs, and the highest target priority order includes a lowest service load or a lowest historical fault rate.

Exemplarily, in FIG. 4, in a case where the faulty protection ring is the first PW application-level protection ring 111, and the first candidate protection rings include the second PW application-level protection ring 112, the third PW application-level protection ring 121, and the fourth PW application-level protection ring 122, since the second PW application-level protection ring 112 and the faulty protection ring, i.e., the first PW application-level protection ring 111, belong to the same higher-level protection ring, i.e., the first TP application-level protection ring 11, it may be determined that the second candidate protection ring is the second PW application-level protection ring 112, and the second PW application-level protection ring 112 may be determined as the target protection ring. In a case where a plurality of second candidate protection rings are provided, the protection ring with the highest target priority order may be selected as the target protection ring, and the highest target priority order represents the lowest service load or the lowest historical fault rate.

Manner 2, in a case where no second candidate protection ring exists among the first candidate protection rings, a protection ring with a highest target priority order among the first candidate protection rings is determined as the target protection ring.

Exemplarily, in a case where the faulty protection ring is the first PW application-level protection ring 111, and the first candidate protection rings include the third PW application-level protection ring 121 and the fourth PW application-level protection ring 122, since the higher-level protection ring of the faulty protection ring, i.e., the first TP application-level protection ring 11, does not include a protection ring that satisfies the preset condition, no second candidate protection ring is included among the first candidate protection rings, the protection ring with the highest target priority order may be selected from the third PW application-level protection ring 121 and the fourth PW application-level protection ring 122 as the target protection ring, and the highest target priority order includes the lowest service load or the lowest historical fault rate.

In a case where the second candidate protection rings exist, determining the target protection ring from the second candidate protection rings can control the scope of impact that may be caused by service switching between the faulty protection ring and the target protection ring to be within the higher-level protection ring of the faulty protection ring, thereby controlling the service impact scope of handling the transmission link fault. By the same reasoning, if the quantity of virtual levels is greater than the three levels shown in the example of FIG. 3, expansion may be performed based on the above technical approach. In the case where no second candidate protection ring exists, it may be further determined whether a third candidate protection ring exists from the higher-higher-level protection ring of the faulty protection ring (i.e., the higher-level protection ring of the higher-level protection ring of the faulty protection ring). In a case where third candidate protection rings exist, a protection ring with a highest target priority order among the third candidate protection rings is determined as the target protection ring. In this way, the scope of impact that may be caused by service switching between the faulty protection ring and the target protection ring may be controlled to be within the higher-higher-level protection ring of the faulty protection ring.

Those skilled in the art may also flexibly set the target priority order according to service requirements, which is not limited in the present application.

By adopting the above technical approach, the service can be switched to the target protection ring at the same virtual level, ensuring normal transmission of the service carried on the faulty protection ring, while avoiding service switching of the entire physical transmission link when part logical transmission links fail, and preventing service switching from affecting services carried on other logical protection rings. This reduces waste of transmission resources, and improves utilization of the transmission resources. In addition, the service impact scope of handling the transmission link fault can be controlled as much as possible, and the reliability of handling the transmission link fault is further improved.

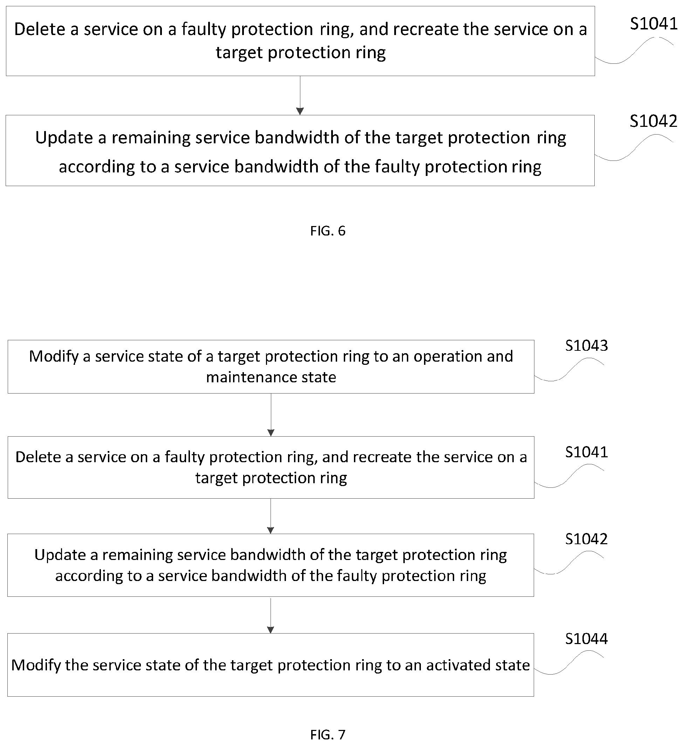

FIG. 6 shows yet another schematic flowchart of the method for handling the transmission link fault provided by embodiments of the present application. As shown in FIG. 6, step S104 may include the following steps. In step S1041, the service on the faulty protection ring is deleted, and the service is recreated on the target protection ring. In step S1042, the remaining service bandwidth of the target protection ring is updated according to the service bandwidth of the faulty protection ring.

Exemplarily, the remaining service bandwidth of the target protection ring may be updated according to the following Formula 1. ${BW}_{T}^{r 2} = {BW}_{T}^{r 1} - {BW}_{S}$ (Formula 1)
wherein, ${BW}_{T}^{r 2}$ is the updated remaining service bandwidth of the target protection ring, ${BW}_{T}^{r 1}$ is the remaining service bandwidth of the target protection ring before service switching, and *BW_{S}* is the service bandwidth of the faulty protection ring.

By adopting the above technical approach, the service on the faulty protection ring can be switched to the target protection ring in a timely manner, ensuring normal transmission of the service carried on the faulty protection ring. The remaining service bandwidth of the target protection ring can also be updated in a timely manner, improving the reliability of handling the transmission link fault.

FIG. 7 shows yet another schematic flowchart of the method for handling the transmission link fault provided by embodiments of the present application. As shown in FIG. 7, step S104 may further include the following steps: before step S1041, step S1043 may also be included, in which the service state of the target protection ring is modified to an operation and maintenance state. After step S1042, step S1044 may also be included, in which the service state of the target protection ring is modified to an activated state.

In some embodiments, after the remaining service bandwidth of the target protection ring is updated according to the service bandwidth of the faulty protection ring and the service state of the target protection ring is modified to the activated state, a consistency check may be performed to determine the consistency between the service state of the target protection ring on the network element device and the service state of the target protection ring on the network management device connected to the network element device.

In some embodiments, deleting the service on the faulty protection ring and recreating the service on the target protection ring may also include updating the creation information of the target protection ring, such as a creation time and a creation user.

In some embodiments, when the service on the faulty protection ring is switched to the target protection ring, the service state of the faulty protection ring may also be modified to the operation and maintenance state, and after the service switching is completed, its service state is updated to a fault state.

By adopting the above technical approach, the service on the faulty protection ring can be switched to the target protection ring in a timely manner, ensuring normal transmission of the service carried on the faulty protection ring. In addition, conflicts in handling the transmission link fault (for example, a plurality of faulty protection rings switch the service to the same target protection ring) can be avoided by modifying the service state, further improving the reliability of handling the transmission link fault.

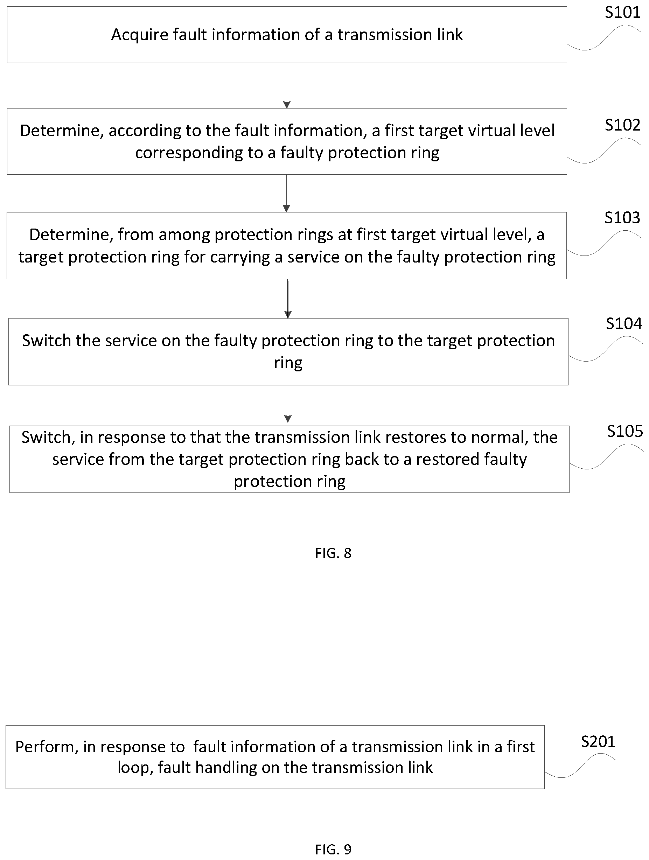

FIG. 8 shows yet another schematic flowchart of the method for handling the transmission link fault provided by embodiments of the present application. As shown in FIG. 8, the method may further include the following steps. In step S105, in response to that the transmission link restores to normal, the service is switched from the target protection ring back to the restored faulty protection ring.

In some embodiments, the service may be switched from the target protection ring back to the restored faulty protection ring in the following manners.

Manner 1, in response to a return operation, the service is switched from the target protection ring back to the restored faulty protection ring.

Manner 2, in a case where a duration after the faulty protection ring restores to normal is greater than or equal to a preset wait-to-restore duration threshold, the service is switched from the target protection ring back to the restored faulty protection ring.

The step of switching the service from the target protection ring back to the restored faulty protection ring is similar to steps S1041-S1042 and will not be described in detail again. After switching the service back to the restored faulty protection ring, the remaining service bandwidth of the target protection ring may be restored according to the service switching situation.

In a case where the faulty protection ring experiences frequent faults, service return may be controlled according to a preset penalty parameter to avoid the impact of frequent service switching on service experience.

By adopting the above technical approach, the service can be switched to the target protection ring at the same virtual level, ensuring normal transmission of the service carried on the faulty protection ring, while avoiding service switching of the entire physical transmission link when some logical transmission links fail, and preventing the service switching from affecting services carried on other logical protection rings. This reduces waste of transmission resources, and improves utilization of the transmission resources. After the transmission link fault restores to normal, the service may also be timely switched back to the restored faulty protection ring that, which can further improve the maintainability of a system.

FIG. 9 shows a schematic flowchart of a method for handling a loop fault provided by embodiments of the present application. As shown in FIG. 9, the method may include the following steps. In step S201, in response to fault information of a transmission link in a first loop, fault handling is performed on the transmission link.

The fault information includes information of a faulty protection ring.

In some embodiments, the method for handling the transmission link fault as shown in the embodiment of the first aspect of the present application may be adopted to perform fault handling on the transmission link. Taking FIG. 2 as an example, the first loop may be an optical fiber protection ring L1. When any transmission link (for example, L1-3) in the first loop fails, the method for handling the transmission link fault as shown in the embodiment of the first aspect of the present application may be adopted to perform fault handling on the transmission link. A first target virtual level corresponding to a faulty protection ring is determined according to the fault information, and a first candidate protection ring that satisfies a preset condition is determined from protection rings at the first target virtual level in the first loop.

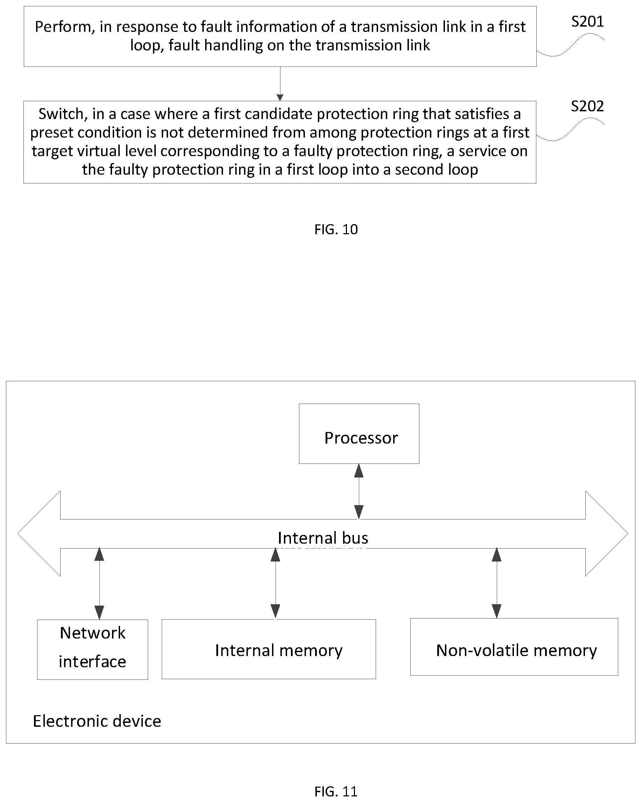

FIG. 10 shows another schematic flowchart of the method for handling the transmission link fault provided by embodiments of the present application. As shown in FIG. 10, the method may further include the following steps. In step S202, in a case where the first candidate protection ring that satisfies the preset condition is not determined from among protection rings at the first target virtual level corresponding to the faulty protection ring, a service on a faulty protection ring in the first loop is switched into a second loop.

The second loop is a protection loop of the first loop, and the preset condition includes a preset state condition and/or a preset capacity condition.

In a case where the first candidate protection ring that satisfies the preset condition is not determined from among the protection rings at the first target virtual level corresponding to the faulty protection ring, the service on the faulty protection ring in the first loop may be switched into the second loop (for example, an optical fiber protection ring L2).

The transmission link fault may be a fault corresponding to protection rings at different virtual levels, and the causes of the fault may be various. In a case where a connection of a logical protection ring at a virtual level is interrupted, or a bit error rate of the connection of the logical protection ring at any virtual level exceeds a preset threshold, the service on the faulty protection ring may be switched only from the first loop to the second loop. In a case where the fault information represents a severe large-scale fault in the transmission link, for example, a physical optical fiber interruption (i.e., connection interruption of logical transmission protection rings at all virtual levels), all services may also be switched from the first loop to the second loop.

By adopting the above technical approach, in a case where no first candidate protection ring that satisfies the preset condition is determined from among the protection rings at the first target virtual level corresponding to the faulty protection ring in the same loop, the service carried on the faulty protection ring in the first loop may be switched into the second loop, thereby achieving cross-loop switching of the service carried on the logical protection ring at the first target virtual level. This can avoid triggering service switching of the entire protection ring when the transmission link fault occurs at some virtual levels, prevent the service switching from affecting the service carried on protection rings at other virtual levels, reduce waste of transmission resources, and improve utilization of the transmission resources.

FIG. 11 shows a schematic structural diagram of hardware of an electronic device provided by an embodiment of the present application. Referring to the figure, at the hardware level, the electronic device includes a processor, and optionally includes an internal bus, a network interface, and a memory. The memory may include an internal memory such as a high-speed random-access memory (RAM), or a non-volatile memory such as at least one disk memory. Of course, the electronic device may also include hardware required for other services. The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, the bus is represented by only one bi-directional arrow in the figure, but it does not indicate only one bus or one type of bus.

The memory is configured to store a program. The program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and specifically performs the method disclosed in the embodiment of the first aspect or the embodiment of the second aspect and achieves the functions and beneficial effects of various methods described in the foregoing method embodiments, which is omitted here.

The above method disclosed in the embodiment of the first aspect or the embodiment of the second aspect of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device can also perform the methods described in the foregoing method embodiments, and achieve the functions and beneficial effects of the methods described in the foregoing method embodiments, which is omitted here.

In addition to the software implementations, the electronic device of the present application does not exclude other implementations, such as logic devices or combinations of software and hardware, that is, an execution body of the following process flows is not limited to each logic unit, but may be hardware or logic devices.

An embodiment of the present application further proposes a computer-readable storage medium. The computer-readable storage medium stores one or more programs. The one or more programs, when executed by an electronic device including a plurality of applications, cause the electronic device to perform the method disclosed in the embodiment of the first aspect or the embodiment of the second aspect and to achieve the functions and beneficial effects of the methods described in the foregoing method embodiments, which is omitted here.

The computer-readable storage medium includes: a read-only memory (ROM), a random access memory (RAM), a magnetic disk or an optical disk, etc.

An embodiment of the present application further provides a computer program product. The computer program product includes a computer program stored on a non-transitory computer-readable storage medium, the computer program includes program instructions, and the program instructions, when executed by a computer, implement the following flow: the method disclosed in the embodiment of the first aspect or the embodiment of the second aspect, and achieve the functions and beneficial effects of the methods described in the foregoing method embodiments, which is omitted here.

In total, the above is merely preferred embodiments of the present application and is not intended to limit the protection scope of the present application. Any modification, equivalent replacement, improvement and the like made within the spirit and principle of the present application shall all be contained in the scope of protection of the present application.

The system, device, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information may be computer-readable instructions, data structures, modules of programs, or other data. Examples of the storage medium for a computer include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disk read-only memory (CD-ROM), a digital versatile disc (DVD) or other optical storage, a magnetic tape cartridge, a magnetic disk storage or other magnetic storage devices, or any other non transmission medium that can store information accessible by the computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, commodity or device including a series of elements not only includes those elements, but also includes other elements not clearly listed, or also includes elements inherent to this process, method, commodity or device. Without further limitations, the elements limited by a statement "including one..." do not exclude the existence of other identical elements in the process, method, commodity or device that includes the said elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A method for handling a transmission link fault, comprising:
acquiring fault information of a transmission link, wherein the fault information comprises information of a faulty protection ring of the transmission link, the transmission link comprises at least two virtual levels, each virtual level comprises at least one protection ring, and each protection ring at a higher virtual level comprises at least one protection ring at a lower virtual level;
determining, according to the fault information, a first target virtual level corresponding to the faulty protection ring;
determining, from among protection rings at the first target virtual level, a target protection ring for carrying a service on the faulty protection ring; and
switching the service on the faulty protection ring to the target protection ring.

2. The method according to claim 1, wherein determining, from among the protection rings at the first target virtual level, the target protection ring for carrying the service on the faulty protection ring comprises:
determining, from among the protection rings at the first target virtual level, first candidate protection rings that satisfy a preset condition, wherein the preset condition comprises a preset state condition and/or a preset capacity condition; and
determining the target protection ring from among the first candidate protection rings.

3. The method according to claim 2, wherein the preset capacity condition comprises that a remaining service bandwidth of a protection ring is greater than or equal to a service bandwidth of the faulty protection ring; and the preset state condition comprises at least one of the following:
a switching allowed function of a protection ring is enabled;
a service state of a protection ring is an activated state; or
a service state of a protection ring on a network management device is consistent with a service state of a protection ring on a network element device.

4. The method according to claim 2, wherein determining the target protection ring from among the first candidate protection rings comprises:
determining, in a case where a plurality of first candidate protection rings are provided, the target protection ring from among the first candidate protection rings according to a preset priority order.

5. The method according to claim 4, wherein determining the target protection ring from among the first candidate protection rings according to the preset priority order comprises:
determining, in a case where second candidate protection rings exist among the first candidate protection rings, a protection ring with a highest target priority order among the second candidate protection rings as the target protection ring; or
determining, in a case where no second candidate protection ring exists among the first candidate protection rings, a protection ring with a highest target priority order among the first candidate protection rings as the target protection ring;
wherein a higher protection ring to which a second candidate protection ring belongs is the same as a higher protection ring to which the faulty protection ring belongs, and the highest target priority order comprises a lowest service load or a lowest historical fault rate.

6. The method according to any one of claims 1 to 5, wherein switching the service on the faulty protection ring to the target protection ring comprises:
deleting the service on the faulty protection ring, and recreating the service on the target protection ring; and
updating a remaining service bandwidth of the target protection ring according to the service bandwidth of the faulty protection ring.

7. The method according to claim 6, further comprising:
modifying, prior to deleting the service on the faulty protection ring and recreating the service on the target protection ring, a service state of the target protection ring to an operation and maintenance state; and
modifying, after updating the remaining service bandwidth of the target protection ring according to the service bandwidth of the faulty protection ring, the service state of the target protection ring to an activated state.

8. The method according to any one of claims 1-5, further comprising:
switching, in response to that the transmission link restores to normal, the service from the target protection ring back to a restored faulty protection ring.

9. The method according to claim 8, wherein switching the service from the target protection ring back to the restored faulty protection ring comprises:
switching, in response to a return operation, the service from the target protection ring back to the restored faulty protection ring; or
switching, in a case where a duration after the faulty protection ring restores to normal is greater than or equal to a preset wait-to-restore duration threshold, the service from the target protection ring back to the restored faulty protection ring.

10. The method according to claim 1, wherein the transmission link is an optical fiber loop, the virtual level comprises a TMS management level and a TP application level, the TMS management level is a higher virtual level of the TP application level, the TMS management level comprises one first protection ring, and the first protection ring comprises at least two second protection rings at the TP application level.

11. The method according to claim 10, wherein the virtual level further comprises a PW application level, the TP application level is a higher virtual level of the PW application level, and each of the second protection rings comprises at least two third protection rings at the PW application level.

12. A method for handling a loop fault, comprising:
performing, in response to fault information of a transmission link in a first loop, fault handling on the transmission link by using the method according to any one of claims 1 to 11, wherein the fault information comprises information of a faulty protection ring.

13. The method according to claim 12, further comprising:
switching, in a case where a first candidate protection ring that satisfies a preset condition is not determined from among protection rings at a first target virtual level corresponding to the faulty protection ring, a service on the faulty protection ring in the first loop to a second loop, wherein the second loop is a protection loop of the first loop, and the preset condition comprises at least one of a preset state condition or a preset capacity condition.

14. An electronic device, comprising:
a processor; and
a memory, arranged to store computer executable instructions, wherein the executable instructions, when executed, use the processor to implement the steps of the method for handling the transmission link fault according to any one of claims 1 to 11, or the executable instructions, when executed, use the processor to implement the steps of the method for handling the loop fault according to claim 12 or 13.

15. A computer-readable storage medium storing one or more programs, wherein the one or more programs, when executed by an electronic device comprising a plurality of application programs, cause the electronic device to perform the steps of the method for handling the transmission link fault according to any one of claims 1 to 11, or the executable instructions, when executed, use a processor to implement the steps of the method for handling the loop fault according to claim 12 or 13.
